(19) Europäisches Patentamt
European Patent Office
Office européen des brevets

(11) **EP 0 521 342 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(51) Int Cl.$^6$: **H04B 10/18**

(21) Anmeldenummer: **92110194.5**

(22) Anmeldetag: **17.06.1992**

(54) **Entzerrer für optische Nachrichtenübertragungssysteme**

Equalizer for optical information transmitting systems

Egaliseur pour systèmes optiques de transmission d'informations

(84) Benannte Vertragsstaaten:
**AT BE CH DE DK ES FR GB IT LI NL SE**

(30) Priorität: **29.06.1991 DE 4121570**

(43) Veröffentlichungstag der Anmeldung:
**07.01.1993 Patentblatt 1993/01**

(73) Patentinhaber:
• **Alcatel SEL Aktiengesellschaft**
**D-70435 Stuttgart (DE)**
Benannte Vertragsstaaten:
**DE**
• **ALCATEL N.V.**
**NL-1077 XX Amsterdam (NL)**
Benannte Vertragsstaaten:
**BE CH DK ES FR GB IT LI NL SE AT**

(72) Erfinder:
• **Heidemann, Rolf, Dr.**
**W-7146 Tamm (DE)**
• **Krimmel, Heinz**
**W-7000 Stuttgart 30 (DE)**
• **Junginger, Bernhard**
**W-7033 Herrenberg (DE)**

(74) Vertreter: **Kugler, Hermann, Dipl.-Phys. et al**
**Alcatel SEL AG**
**Patent- und Lizenzwesen**
**Postfach 30 09 29**
**D-70449 Stuttgart (DE)**

(56) Entgegenhaltungen:
**WO-A-91/07027**

• **ELECTRONICS LETTERS. Bd. 27, Nr. 5, 28. Februar 1991, STEVENAGE GB Seiten 421 - 423 GYSEL ET AL 'Electrical predistortion to compensate for the combined effect of laser chirp and fibre dispersion'**
• **PATENT ABSTRACTS OF JAPAN vol. 15, no. 277 (E-1089)1991 & JP-A-30 94 523 ( HITACHI).**
• **THIRD EUROPEAN CONFERENCE ON OPTICAL COMMUNICATION September 1977, M NCHEN, DE Seiten 202 - 204 YAMAGUCHI ET AL 'Equaliser for step-index fibre transmission'**
• **JOURNAL OF LIGHTWAVE TECHNOLOGY. Bd. 7, Nr. 1, Januar 1989, NEW YORK US Seiten 11 - 23 ALEXANDER ET AL 'Passive equalisation of semiconductor diode laser frequency modulation'**

**Beschreibung**

Die Erfindung betrifft eine Schaltungsanordnung nach dem Oberbegriff des Patentanspruchs 1. Eine derartige Schaltungsanordnung ist bekannt aus Electronics Letters, 28th February 1991, Vol. 27, No. 5, Seiten 421 bis 423. Sie dient als Laufzeitglied, dessen Laufzeit von der Eingangsspannung, also von der Signalspannung, bestimmt wird, da die in Sperrichtung betriebene Kapazitätsdiode ihre Kapazität mit der an ihr bestehenden Sperrspannung ändert.

Es hat sich gezeigt, daß die Eigenschaft der bekannten Schaltungsanordnung, Signale zu entzerren, nur bei einer der zwei möglichen Polungen der Kapazitätsdiode gegeben ist. Ob die Schaltungsanordnung, die im folgenden einfach "Entzerrer" genannt wird, die gewünschte Entzerrung bewirkt oder nicht, hängt also davon ab, ob die Kapazitätsdiode mit ihrer Kathode oder mit ihrer Anode an die Eingangsleitung angeschlossen ist.

Welche Polung die richtige ist, kann nicht vorhergesehen werden, da es bei praktisch zu realisierenden Nachrichtenübertragungssystemen möglich ist, daß in der Übertragungsstrecke zwischen dem sendeseitigen Laser und dem Ort des Entzerrers es zu Polaritätsumkehrungen des Signals, z.B. durch invertierende Verstärker, kommen kann, die dem Betreiber und Installierer des Nachrichtenübertragungssystems nicht bekannt sind, weil sie abgesehen von der hier interessierenden nichtlinearen Signalverzerrung keinerlei Rolle spielen. Bei der Einrichtung einer Übertragungsstrecke mit einem solchen Entzerrer ist es aus praktischen Gründen unerwünscht, daß die geeignete der beiden möglichen Polungen der Kapazitätsdiode durch einen Versuch herausgefunden werden muß. Wünschenswert wäre es vielmehr, eine in allen Fällen funktionierende Entzerrerschaltung zu haben.

Es ist daher die Aufgabe der Erfindung, eine Schaltungsanordnung zum Entzerren der genannten Art anzugeben, die auf einfache Weise und ohne Umpolen der Kapazitätsdiode so einstellbar oder regelbar ist, daß sie in allen Fällen die gewünschte Entzerrerfunktion hat.

Die Aufgabe wird wie im Patentanspruch 1 angegeben gelöst. Weiterbildungen ergeben sich aus den Unteransprüchen.

Die Erfindung wird nun anhand der Zeichnungen durch Beispiele näher erläutert. Es zeigen:

Fig. 1     das Prinzipschaltbild des erfindungsgemäßen Entzerrers,

Fig. 2     schematisch die Abhängigkeit der Kapazität einer Kapazitätsdiode von der an ihr liegenden Sperrspannung,

Fig.     3 eine Weiterbildung des erfindungsgemäßen Entzerrers zum Konstanthalten des Frequenzgangs bei der Entzerrer-Einstellung,

Fig. 4     einen erfindungsgemäßen Entzerrer aus einer Kettenschaltung mit LC-Gliedern nach Fig. 1, und

Fig. 5     einen erfindungsgemäßen Entzerrer in Form einer LC-Kettenschaltung mit LC-Gliedern nach Fig. 3.

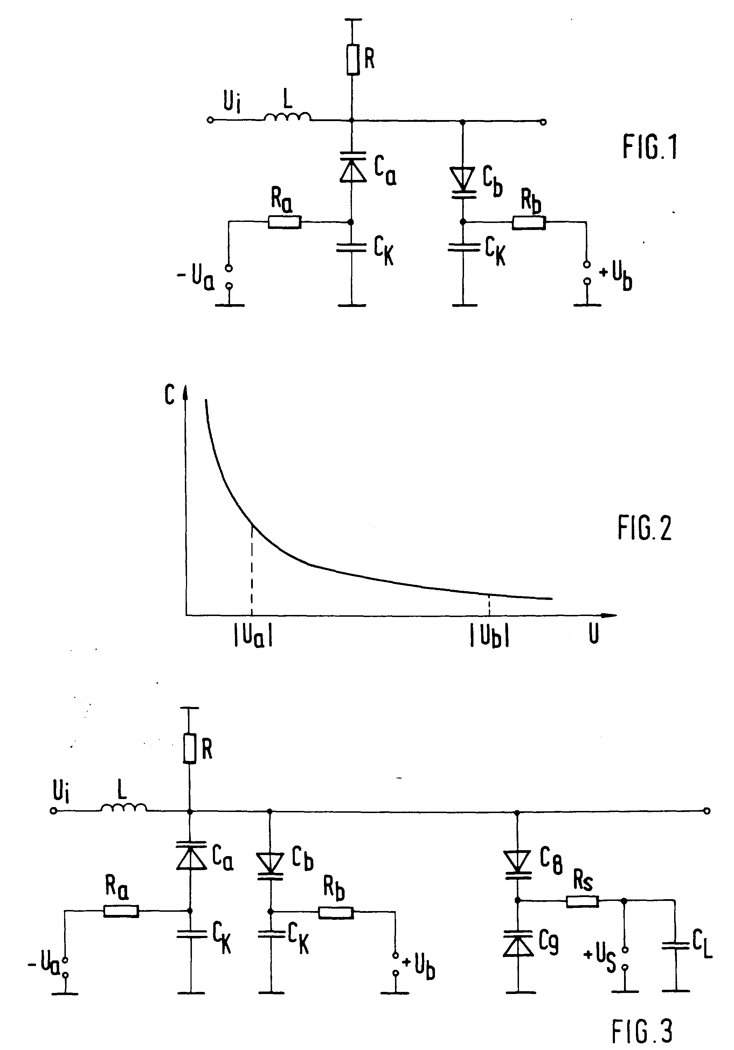

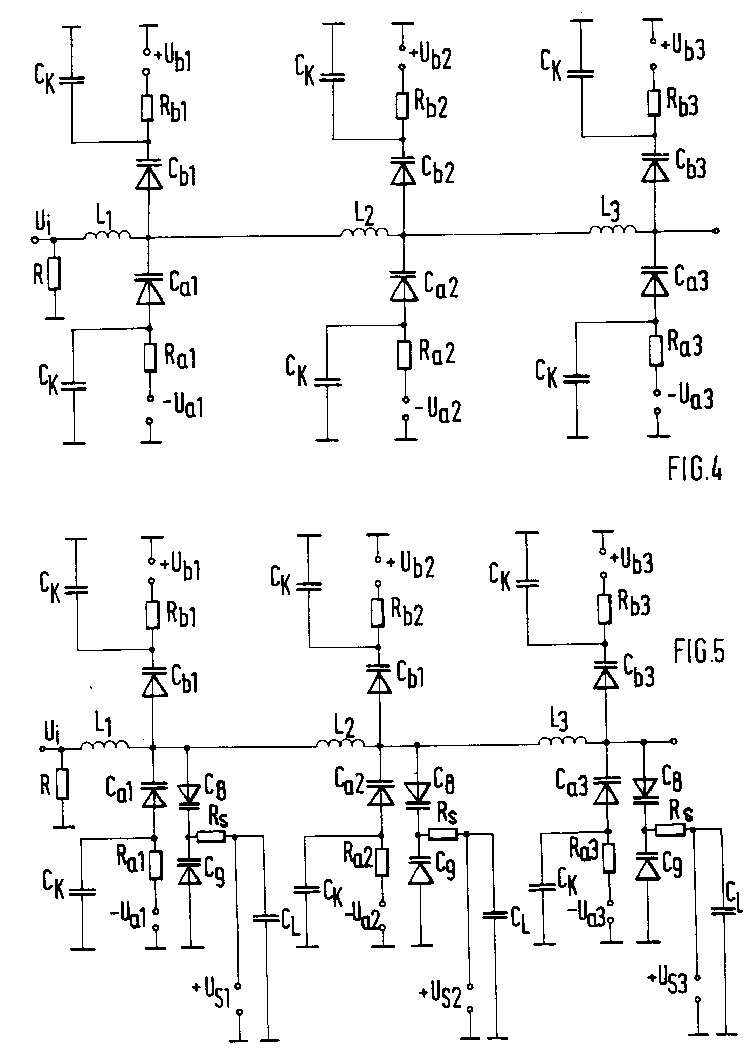

Der Entzerrer nach Fig. 1 hat eine Induktivität L und eine erste Kapazitätsdiode $C_a$, die mit ihrer Kathode an die Induktivität L angeschlossen ist und an einer in Sperrichtung gepolten Vorspannung liegt. Insoweit entspricht er dem in der eingangs genannten Druckschrift (Fig. 4b) gezeigten Entzerrer. Zur Vorspannung der Kapazitätsdiode dient ein Gleichstromkreis, der von Masse über einen Widerstand R, die Kathode der Kapazitätsdiode $C_a$, ihre Anode, über einen Widerstand $R_a$ zum negativen Pol einer Gleichspannungquelle $U_a$ führt, deren anderer Pol an Masse liegt.

Bei dieser Polung der Kapazitätsdiode erhöht sich die an ihr liegende Sperrspannung mit positiven Eingangsspannungen $U_i$, und damit verringert sich ihre Kapazität, so daß positivere Spannungen den Entzerrer schneller durchlaufen als weniger positive. Damit bewirkt die Kapazitätsdiode $C_a$ aber nur dann eine Entzerrung, wenn die bis zu ihm bestehende Übertragungsstrecke die Eigenschaft hat, daß sie positivere Spannungen stärker verzögert als weniger positive Spannungen. Ob dies der Fall ist, hängt von der Anzahl der invertierenden Verstärker, die in die Strecke eingefügt sind, ab und kann daher nie mit Sicherheit vorhergesagt werden. Wenn die Voraussetzung nicht zutrifft, so verstärkt der Entzerrer die bestehende Entzerrung, anstatt ihr entgegenzuwirken.

Zur Lösung des geschilderten Problems ist, wie Fig. 1 zeigt, eine zweite Kapazitätsdiode $C_b$ vorhanden, die antiparallel zur ersten Kapazitätsdiode $C_a$ angeordnet ist. Während $C_a$ mit ihrer Kathode an die Induktivität L angeschlossen ist, ist $C_b$ mit ihrer Anode an L angeschlossen. Um sie ebenfalls in Sperrichtung vorzuspannen, ist eine Spannungsquelle $U_b$ vorhanden, die zusammen mit dem Widerstand R und einem Widerstand $R_b$ einen Gleichstromkreis für die Kapazitätsdiode $C_b$ bildet. Der positive Pol der Spannungsquelle $U_b$ ist mit der Kathode der Kapazitätsdiode $C_b$ verbunden, so daß sie in Sperrichtung vorgespannt ist. Beide Kapazitätsdioden liegen mit ihren der Induktivität L abgewandten Anschlüssen über Kondensatoren $C_K$ wechselspannungsmäßig an Masse.

Wie bei dem bekannten Entzerrer kann außer der Kapazität der Kapazitätsdioden auch die Kapazität eines normalen Kondensators vorhanden sein.

Der neue Entzerrer nach Fig. 1 hat die Eigenschaft, daß, gleichgültig, mit welcher Polarität das Eingangssignal verzerrt ist, eine der beiden Kapazitätsdioden der Entzerrung entgegenwirkt und die andere die Entzerrung verstärkt. In welchem Maße sie dies tun, hängt vom Betrag der an ihnen liegenden, in Sperrichtung gepolten Vorspannung ab.

Anhand von Fig. 2 wird nun erläutert, daß man durch Einstellung der Beträge der beiden Vorspannungen dafür sorgen kann, daß eine der beiden Kapazitätsdioden die gewünschte Entzerrungsfunktion ausübt und die andere hinsichtlich Verzerrung oder Entzerrung nahezu unwirksam ist. Die Kurve der Fig. 2 zeigt schematisch und nur qualitativ, wie die Kapazität einer Kapazitätsdiode von der an ihr in Sperrichtung bestehenden Spannung abhängt. Man sieht, daß die Kapazität mit zunehmender Sperrspannung abnimmt, und daß auch die Steilheit, mit der die Kapazität abnimmt, mit zunehmender Sperrspannung abnimmt. Folglich muß man eine Diode mit geringer Sperrspannung betreiben, wenn man will, daß sich ihre Kapazität mit der an ihr bestehenden Spannung stark ändert, und man muß sie mit hoher Sperrspannung betreiben, wenn man will, daß sich ihre Kapazität mit der Spannung nur wenig ändert. Wählt man also in der Schaltung nach Fig. 1 beispielsweise die Vorspannung $-U_a$ an der Kapazitätsdiode $C_a$ so, daß ihr Betrag gering ist, so wählt man dadurch einen Arbeitspunkt für diese Kapazitätsdiode, bei dem, wie Fig. 2 zeigt, die Kapazität stark spannungsabhängig ist. Wählt man gleichzeitig die Vorspannung $+U_b$ an der Kapazitätsdiode $C_b$ so, daß sie einen hohen Betrag hat, so wählt man dadurch einen Arbeitspunkt, bei dem, wie Fig. 2 zeigt, die Kapazität nur wenig von der Spannung abhängt. In diesem Falle hat $C_a$, je nachdem wie die Verzerrung der Eingangsignale von deren Polarität abhängt, eine stark entzerrende Wirkung oder eine stark verzerrende Wirkung, und $C_b$ eine schwach verzerrende oder eine schwach entzerrende Wirkung. Umgekehrt kann man durch eine hohe betragsmäßige Vorspannung an $C_b$ und eine kleine betragsmäßige Vorspannung an $C_a$ die erstere in den Zustand der starken und die letztere in den Zustand der nur schwachen Spannungsabhängigkeit bringen.

Im praktischen Einsatzfall des neuen Entzerrers kann man wie folgt herausfinden, ob durch eine hohe betragsmäßige Vorspannung an $C_a$ und eine niedrige betragsmäßige Vorspannung an $C_b$ oder umgekehrt sich die gewünschte Entzerrungsfunktion ergibt.

Das Kriterium für die Einstellung der Entzerrung durch Einstellung der Vorspannungen $U_a$ und $U_b$ ist die nichtlineare Signalverzerrung, die das zu übertragende Signal aufgrund des "Laser-Chirp" und der chromatischen Dispersion des die Übertragungsstrecke bildenden Lichtwellenleiters bis zum optischen Empfänger erfährt. Diese nichtlineare Signalverzerrung äußert sich in einem Beitrag zu unerwünschten Signalanteilen im Ausgangssignal des optischen Empfängers und des diesem gegebenenfalls nachgeschalteten elektrischen Verstärkers. Von den unverwünschten Signalanteilen sind besonders die Klirrprodukte zweiter Ordnung störend (englisch: composite second order distortion). Es sind dies Schwingungen mit Frequenzen, wie sie im übertragenen Signal nicht vorkommen, nämlich Schwingungen mit Frequenzen, die Summen und Differenzfrequenzen von jenen Schwingungen sind, aus denen das Eingangssignal des Lasers der Übertragungsstrecke zusammengesetzt ist.

Um ein Maß für die entstehenden Klirrprodukte zu haben, kann man dem Eingangssignal des Lasers ein sogenanntes Pilotsignal mit einer bestimmten Frequenz, d.h. eine unmodulierte Schwingung, hinzufügen und empfangsseitig die daraus entstehenden Klirrprodukte zweiter Ordnung, nämlich Schwingungen mit der doppelten Frequenz hinsichtlich ihres Pegels messen. Man kann aber auch zwei solcher Pilotsignale hinzufügen und empfangsseitig die aus ihnen entstandene Schwingung mit der Summenfrequenz hinsichtlich ihres Pegels messen. In jedem Fall werrden Klirrprodukte zweiter Ordnung als Maß für die nichtlinearen Verzerrungen der übetragenen Singale gemessen.

Ziel der Entzerrung ist es, die Klirrprodukte zweiter Ordnung soweit wie möglich zu unterdrücken. Das relative Maß der Unterdrückung der Klirrprodukte zweiter Ordnung ist also ein Maß für die Wirksamkeit der Entzerrung.

Die Vorspannungen der beiden Kapazitätsdioden $C_a$ und $C_b$ werden nun wie folgt in Abhängigkeit von dem am Ausgang des Entzerrers gemessenen Klirrfaktor zweiter Ordnung des Pilotsignals eingestellt. Zunächst werden beide Vorspannungen betragsmäßig auf ihren Maximalwert eingestellt. Gemäß Fig. 2 haben sie bei maximaler Vorspannung keine wesentliche Wirkung auf die Verzerrung des Signals. Dann wird eine der beiden Vorspannungen betragsmäßig verkleinert und die Änderung des gemessenen Klirrfaktors beobachtet. Wird beispielsweise $U_a$ betragsmäßig verkleinert und vergrößert sich dadurch der Klirrfaktor, so ist klar, daß $C_a$ nicht die Kapazitätsdiode ist, die bei kleiner Sperrspannung für die gewünschte Entzerrung sorgen kann. $U_a$ wird also wieder auf den Maximalwert von z.B. 30 V erhöht. Daraufhin wird mittels der Vorspannung $U_b$ eine optimale Entzerrung eingestellt, was dadurch geschieht, daß $U_b$ betragsmäßig verkleinert wird und dabei sich auch der gemessene Klirrfaktor verringert, solange, bis der Klirrfaktor beginnt, wieder größer zu werden, d.h. sein Minimum erreicht hat.

Die beschriebene Einstellung der Vorspannungen der beiden Kapazitätsdioden kann entweder von Hand in Abhängigkeit von einer Anzeige eines die Klirrprodukte messenden Meßgeräts vorgenommen werden, oder diese Spannungen können durch eine automatische Regelschaltung eingestellt werden, die aus einem solchen Meßgerät und einem Regler besteht, der abhängig von dem gemessenen Wert die Vorspannungen steuert. Eine automatische Regelung ist zu bevorzugen, da sich dadurch der erfindungsgemäße Entzerrer automatisch auf jede beliebige optische Übertragungsstrecke einstellt und sich auch auf jegliche Veränderungen, die eine Übertragungsstrecke durch Wartung, Instandsetzung und jeglichen Veränderungen im Übertragungsnetz, die die Polarität der Empfangssignale am Ende einer Übertragungsstrecke invertieren, einstellen kann. Auch nach erfolgter Optimierung kann sich während des Betriebs ein Reglungsbedarf ergeben, beispielsweise bei Temperaturschwankungen oder aufgrund einer Alterung von Bauelementen und sonstigen Veränderungen.

Im vorstehenden Beschreibungsteil wurde der Fall betrachtet, daß eine der beiden Kapazitätsdioden, z.B. $C_a$, so vorgespannt wird, daß sie die erforderliche Entzerrung leistet, d.h. bei einem Arbeitspunkt betrieben wird, an dem ihre C-U-Kurve (Fig. 2) die erforderliche Steilheit hat, während die andere Kapazitätsdiode bei einem Arbeitspunkt betrieben wird, an dem ihre C-U-Kurve praktisch keine Steilheit hat. Während des Betriebs eines solchen Entzerrers kann es nun vorkommen, daß sich die erforderliche Entzerrung verringert, sei es dadurch, daß der für die Verzerrung primär verantwortliche Laser der Übertragungsstrecke durch einen besseren ersetzt wird oder daß der Entzerrer an eine Lichtwellenleiter mit geringerer chromatischer Dispersion oder eine Lichtwellenleiter mit geringerer Länge angeschlossen wird. Dann muß die Sperrspannung betragsmäßig vergrößert werden, damit der Entzerrer bei einem Arbeitspunkt mit geringerer Steilheit der C-U-Kurve betrieben und die Entzerrung dadurch den geänderten Verhältnissen angepaßt wird.

Eine solche Anpassung verringert, wie Fig. 2 zeigt, unvermeidbar die Kapazität der die Entzerrung bewirkenden Kapazitätsdiode, was wiederum den Wellenwiderstand der Leitung und damit die Dämpfung der zu übertragenden Signale in ihrer Frequenzabhängigkeit verändern kann. Es kann also vorkommen, daß man durch die genannte Anpassung zwar die Entzerrung optimiert, jedoch gleichzeitig dadurch die Frequenzabhängigkeit der Dämpfung des Entzerrers, den sogenannten Frequenzgang, verschlechtert.

Daher wäre es wünschenswert, eine zu Entzerrungszwecken vorgenommene Verringerung der Kapazität des LC-Gliedes ausgleichen zu können.

Anhand von Fig. 3 wird eine Weiterbildung der bisher beschriebenen Erfindung erläutert, die die Möglichkeit schafft, die genannte Kapazitätsverringerung auszugleichen. Im linken Teil enthält die Schaltung nach Fig. 3 genau das oben anhand von Fig. 1 gezeigte LC-Glied, das keiner nochmaligen Erläuterung bedarf. Der rechte Teil zeigt eine Antiserienschaltung zweier Kapazitätsdioden $C_8$ und $C_9$, die der Kapazität des bisher erläuterten LC-Gliedes parallel geschaltet ist. Eine steuerbare Spannungsquelle $U_s$, deren einer Pol mit Masse verbunden und deren anderer, gegenüber Masse positiver Pol, über einen Widerstand $R_S$ mit dem Verbindungspunkt der Kathoden der beiden Kapazitätsdioden verbunden ist, dient dazu, beide Kapazitätsdioden $C_8$ und $C_9$ in Sperrichtung vorzuspannen. Um hochfrequente Schwingungen von der Spannungsquelle $U_s$ abzublocken, ist ein Kondensator $C_L$ der Spannungsquelle gegen Masse parallel geschaltet.

Der Entzerrer nach Fig. 3 hat, wie später erläutert wird, den Vorteil, daß die Gesamtkapazität der Antiserienschaltung der beiden Kapazitätsdioden $C_8$ und $C_9$

zwar von der Vorspannung $U_s$ abhängt und damit über diese gesteuert werden kann, jedoch andererseits jedenfalls in erster Näherung nicht von der Signalspannung $U_i$ abhängt und damit keinen Einfluß auf die Verzerrung oder Entzerrung des Signals hat. Auf diese Weise ist der Parallelschaltung aus den Kapazitäten $C_a$ und $C_b$ eine einstellbare Kapazität parallel geschaltet, mit der eine im Zusammenhang mit der erforderlichen Signalentzerrung unvermeidbar erfolgte Änderung der Kapazität von $C_a$ oder $C_b$ kompensiert werden kann.

Da die steuerbare Kapazität der Antiserienschaltung von $C_8$ und $C_9$ die Möglichkeit bietet, die auf optimale Entzerrung eingestellte Kapazität der Kapazitätsdiode $C_a$ zu einer Gesamtkapazität des LC-Gliedes zu ergänzen, die den gewünschten Frequenzgang des LC-Gliedes gewährleistet, ist es auch möglich, daß man als Ausgangs-Arbeitspunkt zunächst $C_a$ auf eine mittlere Entzerrung einstellt und die Gesamtkapazität des LC-Gliedes durch geeignete Wahl der Steuerspannung $U_S$ im Hinblick auf einen optimalen Frequenzgang einstellt. Ist es ausgehend von einem solchen Arbeitspunkt erforderlich, die Entzerrung zu vergrößern, also die Kapazität von $C_a$ zu erhöhen, so kann dies durch eine entsprechende Verkleinerung der Kapazität der Antiserienschaltung von $C_8$ und $C_9$ durch Änderung der Steuerspannung $U_S$ ausgeglichen werden.

Im allgemeinen ist also die Serienschaltung von $C_8$ und $C_9$ eine steuerbare Kapazität, die dazu dient, jegliche Änderungen von $C_a$ oder $C_b$, die zur Optimierung der Entzerrung erforderlich sind, im Hinblick auf die Gesamtkapazität des LC-Gliedes auszugleichen, so daß trotz der Änderungen von $C_a$ oder $C_b$ der Frequenzgang des LC-Gliedes konstant gehalten werden kann.

Im folgenden wird erläutert, warum die Gesamtkapazität der Serienschaltung im wesentlichen nur von der Steuerspannung $U_S$ und nicht von der Signalspannung $U_i$ abhängt. Solange die Signalspannung $U_i$ gleich 0 ist, liegt zwischen der Kathode und der Anode von $C_8$ die Steuerspannung $U_S$ und ebenso zwischen der Kathode und der Anode von $C_9$ (Ein Gleichstrom über $R_S$ fließt nicht.). Die Kapazitätsdioden $C_8$ und $C_9$ seien gleich, und die durch die Steuerspannung $U_S$ an ihnen eingestellte Kapazität sei jeweils mit $C_0$ bezeichnet. Eine Signalspannung $U_i$ ergibt zwischen der Anode und der Kathode von $C_8$ eine Spannung $U_{C8} = U_S - 1/2\ U_i$ und zwischen der Kathode und der Anode von $C_9$ eine Spannung $U_{C9} = U_S + 1/2\ U_i$, da die Spannung $U_i$ zur Hälfte an $C_8$ und zur Hälfte an $C_9$ abfällt. In anderen Worten: eine Änderung der Signalspannung von 0 auf $U_i$ erniedrigt die an $C_8$ bestehende Sperrspannung von $U_S$ um $1/2\ U_i$ und erhöht die an $C_9$ bestehende Sperrspannung von $U_S$ um $1/2\ U_i$. Dadurch erhöht sich Kapazität von $C_8$ auf $C_8 = C_0 + \Delta C$ und vermindert sich die Kapazität von $C_9$ auf $C_9 = C_0 - \Delta C$, wobei $\Delta C$ einen geringen Wert darstellt. Die Gesamtkapazität der Serienschaltung beträgt somit

$$C_g = \frac{C_8 \cdot C_9}{C_8 + C_9} = \frac{C_0{}^2 - \Delta C^2}{2C_0} \simeq \frac{C_0}{2},$$

da $\Delta C^2$ wegen des kleinen Werts von $\Delta C$ vernachlässigt werden kann. Da $C_0$, wie oben gesagt, nur durch $U_S$ bestimmt wird, ist also die Gesamtkapazität, jedenfalls in erster Näherung, nur von $U_S$ und nicht von der Signalspannung $U_i$ abhängig.

Bei der weiter oben gegebenen Erläuterung der Wirkungsweise der Antiserienschaltung von $C_8$ und $C_9$ wurde davon ausgegangen, daß, nachdem herausgefunden ist, welche der beiden Kapazitätsdioden $C_a$ und $C_b$ die zur Entzerrung geeignete Polung hat, nur die Vorspannung dieser Kapazitätsdiode zum Zwecke der Entzerrungsoptimierung eingestellt und die Vorspannung der anderen auf ihrem Maximalwert festgehalten wird. Diese letztere Kapazitätsdiode spielt also für die Optimierung der Entzerrung praktisch keine Rolle und könnte daher auch weggelassen werden, wenn die geeignete Polung der entzerrenden Kapazitätsdiode mit anderen Mitteln als durch die anhand von Fig. 1 beschriebene antiparallel geschaltete zweite Kapazitätsdiode herausgefunden wird oder eine Unsicherheit in der Polarität des Eingangssignals überhaupt nicht besteht. Auch in solchen Fällen ist die anhand von Fig. 3 beschriebene Antiserienschaltung der zusätzlichen Kapazitätsdioden $C_8$ und $C_9$ dazu geeignet, Veränderungen der Vorspannung der entzerrenden Kapazitätsdiode und damit deren Kapazität so auszugleichen, daß der Wellenwiderstand des LC-Gliedes und damit dessen Frequenzgang durch die Veränderung unbeeinflußt bleibt.

Andererseits erscheint es möglich, auf die Antiserienschaltung von $C_8$ und $C_9$ zu verzichten und die Änderung der Kapazität der einen Kapazitätsdiode $C_a$ durch eine Änderung der Kapazität von $C_b$ auszugleichen, d.h. $U_b$ nicht auf dem Maximalwert zu belassen, sondern so nachzuregeln, daß bei einer zur Optimierung der durch $C_a$ bewirkten Entzerrung vorgenommenen Änderung der Vorspannung $U_a$ der Wellenwiderstand des LC-Gliedes nach Fig. 1 und damit dessen Frequenzgang unbeeinflußt bleibt.

Aus dem Vorstehenden ist ersichtlich, daß die erfindungsgemäße Schaltung verschiedene Möglichkeiten bietet, die Vorspannungen $U_a$ und $U_b$ und gegebenenfalls die Steuerspannung $U_S$ einzustellen.

Das Kriterium für die Einstellung des Frequenzgangs des Entzerrers ist der Dämpfungsunterschied, der bei der Übertragung unterschiedlicher Frequenzen über die gesamte Übertragungsstrecke am Ausgang des Entzerrers gemessen werden kann. Man mißt ihn vorzugsweise, indem man sendeseitig zwei Pilotsignale unterschiedlicher Frequenzen mit konstanten Pegeln dem zu übertragenden elektrischen Signalgemisch hinzufügt und am Ausgang des empfangsseitigen Entzerrers den Pegelunterschied der beiden Pilotsignale mißt, der im Idealfall gleich einem Sollwert sein sollte.

Das Kriterium für die Einstellung der Entzerrung des Entzerrers ist der oben erläuterte Klirrfaktor zweiter Ordnung. Mißt man diesen Klirrfaktor mit einem Klirrdetektor und den Pegelunterschied zweier Pilotsignale unterschiedlicher Frequenzen mit einem sogenannten Frequenzgang-Meßgerät, so kann man von Hand die Einstellung der Entzerrung und gegebenenfalls des Frequenzgangs des Entzerrers wie oben erläutert vornehmen.

Andererseits kann der Entzerrer durch Vorsehen einer Regelschaltung zu einer automatischen Entzerrer-Schaltungsanordnung erweitert werden.

Hierzu ergeben sich aufgrund der oben erläuterten Einstellmöglichkeiten und meßbaren Kriterien zur Einstellung folgende Möglichkeiten:

a) Die Schaltungsanordnung enthält einen Entzerrer nach Fig. 1. An seinen Ausgang ist ein die Klirrprodukte zweiter Ordnung eines oder mehrerer Pilotsignale messender Klirrdetektor angeschlossen, dessen Ausgangssignal in einen Regler eingegeben wird, der dem gemessenen Klirrfaktor entsprechend die Vorspannungen $U_a$ und $U_b$ einstellt, derart, daß die eine der beiden Dioden praktisch die Entzerrung durchführt und die andere bei maximaler betragsmäßiger Vorspannung betrieben wird und damit zur Entzerrung oder Verzerrung praktisch nicht beiträgt.

b) Der Entzerrer ist ebenfalls einer nach Fig. 1. An seinen Ausgang ist ein die Klirrprodukte zweiter Ordnung eines oder mehrerer Pilotsignale messender Klirrdetektor und eine Frequenzgang-Meßeinrichtung angeschlossen. Beide Ausgangssignale werden in einen Regler eingegeben, der wie oben beschrieben sowohl die erforderliche Entzerrung durch im wesentlichen eine der beiden Dioden regelt als auch den Frequenzgang des Entzerrers durch die andere der beiden Dioden konstant hält.

c) Die Schaltungsanordnung enthält als Entzerrer einen nach Fig. 3, und die Regelschaltung besteht aus einem an dem Entzerrerausgang angeschlossenen Klirrdetektor zur Messung der aus einem oder mehreren Pilotsignalen entstandenen Klirrprodukte zweiter Ordnung und einer Frequenzgang-Meßeinrichtung wie oben beschrieben. Beide Ausgangssignale werden in einen Regler eingegeben, der daraus die Stellgrößen zur Einstellung der Vorspannungen $U_a$, $U_b$ und $U_S$ bildet und damit sowohl die Entzerrung regelt als auch dabei den Frequenzgang konstant hält.

d) Die Schaltungsanordnung enthält einen Entzerrer nach Fig. 3, jedoch ohne eine zweite Kapazitätsdiode, also entweder nur mit einer Kapazitätsdiode $C_a$ und der dazugehörigen Vorspannungsschaltung oder nur mit einer Kapazitätsdiode $C_b$ und der dazugehörigen Vorspannungsschaltung. An den Ausgang dieses Entzerrers sind ein Klirrdetektor zur Messung der aus einem oder mehreren Pilotsignalen entstandenen Klirrprodukte zweiter Ordnung und eine Frequenzgang-Meßeinrichtung zum Messen des Frequenzgangs angeschlossen, deren Ausgangssignale in einen Regler eingegeben werden, der Stellgrößen zum Einstellen der Vorspannung der zum Entzerren dienenden Kapazitätsdiode und zum Konstanthalten des Frequenzgangs bei dieser Entzerrung bildet.

Da nicht nur der "Laser-Chirp" in Verbindung mit der chromatischen Dispersion des Lichtwellenleiters Klirrprodukte zweiter Ordnung verursacht, sondern auch die im Hinblick auf die im Laser stattfindende Intensitätsmodulation im Laser selbst bestehende Nichtlinearität, erscheint es für die vorstehend beschriebene empfangsseitige Entzerrung nützlich, beim Laser einen Vorentzerrer zur Kompensation der Laser-Nichtlinearität zu verwenden, vorzugsweise einen geregelten Vorentzerrer z.B. einen der aus der DE-A1 33 07 309 bekannten Art.

In den vorstehend beschriebenen Ausführungsbeispielen der Erfindung wird die erforderliche Signalentzerrung stets durch die Spannungsabhängigkeit einer einzigen Kapazitätsdiode, nämlich die mit der niedrigen Vorspannung betriebene Kapazitätsdiode ($C_a$ im Beispiel der Fig. 2) des LC-Gliedes bewirkt.

Versuche haben gezeigt, daß mit dem oben beschriebenen LC-Glied eine ausreichende Entzerrung, die die Signale nicht unzulässig dämpft, nur möglich ist, sofern einerseits die zu entzerrenden Verzerrungen der Signale nicht zu groß sind und andererseits die Bandbreite der zu übertragenden Signale nicht zu groß ist. Die nichtlinearen Verzerrungen, die ein Signal, das optisch über eine Lichtwellenleiter-Strecke übertragen wird, erfährt und die durch die Entzerrung kompensiert werden sollen, sind in erheblichem Maße verursacht durch den sogenannten "Laser-Chirp", d.h. einer von der Signalamplitude des optisch zu übertragenden elektrischen Signals abhängige unerwünschte Wellenlängenschwankung des optischen Signals, in Verbindung mit der chromatischen Dispersion des verwendeten Lichtwellenleiters. Je größer der "Laser-Chirp", die chromatishcen Dispersion des Lichtwellenleiters und dessen Länge sind, je größer sind die nichtlinearen Verzerrungen, die das Signal erfährt.

Es hat sich gezeigt, daß mit einem Laser oder Betriebswellenlänge von 1550 nm, der einen relativ geringen "Laser-Chirp" hat, mit einem Standard-Einmoden-Lichtwellenleiter und einem Entzerrer der bekannten Art oder einem Entzerrer nach Art des in Fig. 1 oder Fig. 3 beschriebenen eine befriedigende Signalübertragung möglich ist, wenn die Länge des Lichtwellenleiters nicht größer als 12 km und die Bandbreite der zu übertragende Signale nicht größer als 450 MHz ist. Sollen Signale entzerrt werden, die eine größere Lichtwellenleiter-Länge als 12 km durchlaufen haben, so bietet der bekannte oder der vorstehend beschriebene Entzerrer nur die Möglichkeit, die Vorspannung der entzerrenden Kapazitätsdiode entsprechend niedrig einzustellen, wodurch aber die Grenzfrequenz des Entzerrers, d.h. die maximale Frequenz von dämpfungsfrei übertragenen Signalen, herabgesetzt wird. In anderen Worten: Soll der bekannte oder der vorstehend beschriebene Entzerrer in der Lage sein, erhebliche Signalverzerrungen entzerren zu können, so ist seine Grenzfrequenz so niedrig, daß sie zur breitbandigen Signalübertragung, wie z.B. von Signalen des Kabelfernseh-Frequenzbandes, das bis 450 MHz reicht, zu gering ist.

Für bestimmte Anwendungsfälle ist daher ein Entzerrer erforderlich, der einerseits für starke Verzerrungen geeignet ist und andererseits eine Grenzfrequenz hat, die hoch genug ist für eine breitbandige Signalübertragung, z.B. eine mit einem bis zu 600 MHz reichenden Frequenzband.

Erreicht wird dieses Ziel durch eine Weiterbildung der Erfindung, wie sie in Fig. 4 oder Fig. 5 gezeigt ist, nämlich durch eine Kettenschaltung aus LC-Gliedern der in Fig. 1 oder in Fig. 3 gezeigten und oben erläuterten Art.

Fig. 4 zeigt eine Kettenschaltung aus drei LC-Gliedern nach Fig. 1, von denen jedes lediglich zeichnerisch etwas anderes dargestellt ist als das in Fig. 1 gezeigte. Für jedes der LC-Glieder sind dieselben Bezugszeichen der Elemente wie in Fig. 1 verwendet, lediglich mit einem zweiten Index, der angibt, daß das Element zum 1., 2. oder 3. LC-Glied gehört.

Fig. 5 zeigt eine LC-Kettenschaltung aus drei LC-Gliedern nach Fig. 3, also dieselbe LC-Kettenschaltung wie Fig. 3, allerdings mit der zu jedem LC-Glied gehörenden Zusatzschaltung mit der steuerbaren Kapazität der Antiserienschaltung von $C_8$ und $C_9$ zum Konstanthalten des Frequenzgangs jedes LC-Gliedes der Kette und damit des Frequenzgangs der gesamten Kette.

Selbstverständlich sind Kettenschaltungen mit einer beliebigen Anzahl von LC-Gliedern der gezeigten Art prinzipiell geeignet und auch LC-Kettenschaltungen, deren kapazitive Elemente nicht nur durch Kapazitätsdioden gebildet sind. Beispielsweise kann die Kettenschaltung ein oder mehrere LC-Glieder enthalten, die wie der bekannte Entzerrer zusätzlich einen normalen Kondensator enthalten.

Alles über die Steuer- oder Regelbarkeit der Entzerrung und des Frequenzgangs eines einzelnen LC-Gliedes nach Fig. 1 oder Fig. 3 oben Erläuterte gilt auch für die LC-Glieder der LC-Kettenschaltung.

Bei einer Kettenschaltung wie sie in Fig. 4 oder 5 gezeigt ist können die Induktivitäten und die Kapazitäten $C_{ai}$ und $C_{bi}$ (i = 1, 2, 3, ...) prinzipiell so gewählt werden, wie es der Wellenwiderstand der Leitung, in die die Schaltung einzufügen ist, und die Bandbreite der über die Leitung zu übertragenden Signale erfordern. Insbesondere ist es möglich, die Kapazitätsdioden $C_{ai}$ und $C_{bi}$ so zu wählen und/oder durch geeignete Vorspannungen so zu betreiben, daß sie eine geringe Kapazität haben, auch in dem Zustand, in dem sie zur Entzerrung beitragen sollen.

Die Entzerrung, die jedes einzelne LC-Glied für sich genommen bewirkt, ist dann zwar relativ gering. Z.B. ist es eine solche Entzerrung, wie sie sich ergibt, wenn die Kapazität der zur Entzerrung dienenden Diode $C_{ai}$ oder $C_{bi}$ durch eine Sperrspannung bestimmt wird, die zwischen den in Fig. 2 eingezeichneten Spannungswerten liegt. Trotzdem hat die gesamte LC-Kettenschaltung eine beträchtliche Entzerrungsfähigkeit, da sich die Entzerrungen, die die einzelnen Glieder für sich bewirken, zueinander addieren und somit die Gesamtheit der LC-Glieder eine hinreichende spannungsabhängige Verzögerung der Eingangssignale, also eine hinreichende Entzerrung der nichtlinear verzerrten Signale, bewirkt.

Da sich die Gesamtentzerrung der erfindungsgemäßen LC-Kettenschaltung aus Beiträgen der einzelnen LC-Glieder additiv zusammensetzt, können die einzelnen LC-Glieder so betrieben werden, daß ihre Kapazität relativ gering ist und auch bei der Einstellung der Entzerrung die anderen Schaltungsparameter nur wenig verändert. Dadurch bleibt ihr Einfluß auf die Frequenzabhängigkeit der Dämpfung, den sogenannten Frequenzgang, der gesamten LC-Kette relativ gering.

Ein weiterer Vorteil der erfindungsgemäßen LC-Kettenschaltung liegt darin, daß die Vorspannungen der einzelnen Kapazitätsdioden ungleich gewählt und unabhängig von einander verändert werden können. Damit sind soviele Freiheitsgrade wie Kapazitätsdioden gegeben, um den Entzerrer auf irgendeine bestehende Verzerrung einzustellen. Beispielsweise ist es möglich, eines oder mehrere der LC-Glieder mit einer so hohen Sperrspannung zu betreiben, daß es praktisch nichts zur Entzerrung beiträgt, und es erst bedarfsweise durch Verkleinern seiner Sperrspannung zur Entzerrung beitragen zu lassen.

Selbstverständlich ist es auch möglich, daß die Anschlüsse der gleichgepolten Kapazitätsdioden mit einer einzigen Spannungsquelle verbunden sind, entweder über unterschiedliche Widerstände $R_{a1}$ bis $R_{a3}$ bzw. $R_{b1}$ bis $R_{b3}$ oder über einen einzigen Widerstand, z.B. über den Widerstand $R_{a1}$ mit der in diesem Falle gemeinsamen Spannungsquelle $U_{a1}$ bzw. $U_{b1}$ und somit alle gleich gepolten Kapazitätsdioden simultan einstell- oder regelbar sind.

Hinsichtlich der Vorspannungseinstellung der zu den LC-Gliedern gehörenden Antiserienschaltung ($L_8$ und $L_9$) und deren Einstellung gilt dasselbe entsprechend.

**Patentansprüche**

1. Schaltungsanordnung zum Entzerren von über optische Nachrichtenübertragungssysteme übertragenen nichtlinear verzerrten Signalen mit einem LC-Glied (L, $C_a$) dessen kapazitives Element eine in Sperrichtung vorgespannte Kapazitätsdiode ($C_a$) enthält, **dadurch gekennzeichnet,** daß der Kapazitätsdiode ($C_a$) eine weitere Kapazitätsdiode ($C_b$) mit entgegengesetzter Polung parallel geschaltet ist und ebenfalls in Sperrichtung vorgespannt ist, und daß die beiden Vorspannungen ($U_a$, $U_b$) derart einstellbar sind, daß entweder im wesentlichen nur die eine Kapazitätsdiode ($C_a$) oder im wesentlichen nur die andere Kapazitätsdiode ($C_b$) eine mit der anliegenden Signalspannung variierende Kapazität hat (Fig. 1).

2. Schaltungsanordnung nach Anspruch 1, dadurch gekennzeichnet, daß der Kapazität des LC-Gliedes eine Antiserien-Schaltung zweier weiterer Kapazitätsdioden ($C_8$, $C_9$) parallel geschaltet ist, deren Gesamtkapazität durch eine einstellbare Vorspannung ($U_S$) bestimmt ist (Fig. 3).

3. Schaltungsanordnung nach Anspruch 1, dadurch gekennzeichnet, daß sie eine Regelschaltung hat, die enthält:

   - eine Einrichtung, die am Ausgang des LC-Gliedes die aus einem oder mehreren Pilotsignalen entstandenen Klirrprodukte zweiter Ordnung als Maß für die nichtlineare Verzerrung der übertragenen Signale mißt und
   - einen Regler, der aufgrund der gemessenen Klirrprodukte die Vorspannung ($U_a$) der einen Kapazitätsdiode ($C_a$) im Hinblick auf eine maximale Reduzierung des gemessenen Klirrprodukte einstellt und die Vorspannung ($U_b$) der anderen Kapazitätsdiode ($C_b$) auf einen konstanten, maximalen Wert einstellt.

4. Schaltungsanordnung nach Anspruch 1, dadurch gekennzeichnet, daß sie eine Regelschaltung hat, die enthält:

   - eine Einrichtung, die am Ausgang des LC-Gliedes die aus einem oder mehreren Pilotsignalen entstandenen Klirrprodukte zweiter Ordnung als Maß für die nichtlineare Verzerrung der übertragenen Signale mißt,
   - eine Frequenzgang-Meßeinrichtung, die am Ausgang des LC-Gliedes den Pegelunterschied zweier Pilotsignale als Maß für die Frequenzabhängigkeit der Dämpfung des LC-Gliedes mißt, und
   - einen Regler, der aufgrund der gemessenen Klirrprodukte die Vorspannung $U_a$ der einen Kapazitätsdiode ($C_a$) im Hinblick auf eine maximale Reduzierung der gemessenen Klirrprodukte einstellt und bei dieser Einstellung, falls erforderlich, durch Variation der Vorspannung ($U_b$) der anderen Kapazitätsdiode ($C_b$) den gemessenen Pegelunterschied der beiden Pilotsignale konstant hält.

5. Schaltungsanordnung nach Anspruch 2, dadurch gekennzeichnet, daß sie eine Regelschaltung hat, die enthält:

- eine Einrichtung, die am Ausgang des LC-Gliedes die aus einem oder mehreren Pilotsignalen entstandenen Klirrprodukte zweiter Ordnung als Maß für die nichtlineare Verzerrung der übertragenen Signale mißt,
- eine Frequenzgang-Meßeinrichtung, die am Ausgang des LC-Gliedes den Pegelunterschied zweier Pilotsignale als Maß für die Frequenzabhängigkeit der Dämpfung der übertragenen Signale mißt, und
- einen Regler, der aufgrund der gemessenen Klirrprodukte die Vorspannung ($U_a$) der einen Kapazitätsdiode ($C_a$) im Hinblick auf eine maximale Reduzierung der gemessenen Klirrprodukte einstellt und die Vorspannung ($U_b$) der anderen Kapazitätsdiode ($C_b$) auf einen konstanten, maximalen Wert einstellt und aufgrund des gemessenen Pegelunterschieds der Pilotsignale die die Gesamtkapazität der Antiserien-Schaltung der beiden Kapazitätsdioden ($C_8$, $C_9$) bestimmende Vorspannung ($U_S$) derart einstellt, daß der Pegelunterschied der beiden Pilotsignale weitgehend unabhängig bleibt von der im Hinblick auf eine maximale Entzerrung erfolgenden Einstellung der Vorspannung ($U_a$) der einen Kapazitätsdiode ($U_a$).

6. Schaltungsanordnung zum Entzerren von über optische Nachrichtenübertragungssysteme übertragenen nichtlinear verzerrten Signalen mit einem LC-Glied (L, $C_a$), dessen Kapazität eine in Sperrichtung vorgespannte Kapazitätsdiode ($C_a$) enthält,

**dadurch gekennzeichnet,**
daß der Kapazitätsdiode ($C_a$) eine Antiserien-Schaltung zweier weiterer-Kapazitätsdioden ($C_8$, $C_9$) parallel geschaltet ist, deren Gesamtkapazität durch eine einstellbare Vorspannung ($U_S$) bestimmt ist.

7. Schaltungsanordnung nach Anspruch 6, dadurch gekennzeichnet, daß sie eine Regelschaltung hat, die enthält:

- eine Einrichtung, die am Ausgang des LC-Gliedes die aus einem oder mehreren Pilotsignalen entstandenen Klirrprodukte als Maß für die nichtlineare Verzerrung der übertragenen Signale mißt,
- eine Frequenzgang-Meßeinrichtung, die am Ausgang des LC-Gliedes den Pegelunterschied zweier Pilotsignale als Maß für die Frequenzabhängigkeit der Dämpfung der übertragenen Signale mißt, und
- einen Regler, der aufgrund der gemessenen Klirrprodukte die Vorspannung der Kapazitätsdiode im Hinblick auf eine maximale Reduzierung der gemessenen Klirrprodukte einstellt und aufgrund des gemessenen Pegelunterschieds der Pilotsignale die die Gesamtkapazität der Antiserien-Schaltung der beiden Kapazitätsdioden bestimmende Vorspannung derart einstellt, daß der Pegelunterschied der beiden Pilotsignale weitgehend unabhängig bleibt von der im Hinblick auf eine maximale Entzerrung erfolgenden Einstellung der Vorspannung der Kapazitätsdiode.

8. Schaltungsanordnung zum Entzerren von über optische Nachrichtenübertragungssysteme übertragenen nichtlinear verzerrten Signalen mit einem LC-Glied (L, $C_a$), dessen kapazitives Element eine in Sperrichtung vorgespannte Kapazitätsdiode ($C_a$) enthält,

**dadurch gekennzeichnet,**
daß sie aus einer Kettenschaltung mehrerer Schaltungsanordnungen, wie sie in einem der vorstehenden Ansprüche beschrieben sind, besteht (Fig. 4, Fig. 5).

**Claims**

1. Circuit designed to compensate for nonlinear distortions in signals transmitted through optical communication systems, comprising an LC section (L, $C_a$) whose capacitive element includes a reverse-biased varactor diode ($C_a$), characterized in that an additional reverse-biased varactor diode ($C_b$) is connected in inverse parallel with said varactor diode ($C_a$), and that the two bias voltages ($U_a$, $U_b$) are adjustable so that essentially only one ($C_a$) of the varactor diodes or essentially only the other ($C_b$) has a capacitance varying with the applied signal voltage (Fig. 1).

2. A circuit as claimed in claim 1, characterized in that two additional varactor diodes ($C_8$, $C_9$) in series opposition whose total capacitance is determined by an adjustable bias ($U_S$) are connected in parallel with the capacitive element of the LC section (Fig. 3).

3. A circuit as claimed in claim 1, characterized in that it has a control circuit which contains:

- a device which measures at the output of the LC ladder network the second-order distortion products of one or more pilot signals as a measure of the nonlinear distortions in the transmitted signals, and

- a controller which adjusts the bias ($U_a$) of said one varactor diode ($C_a$) to obtain a maximum reduction of the measured distortion products and maintains the bias ($U_b$) of said other varactor diode ($C_b$) at a constant maximum value.

4. A circuit as claimed in claim 1, characterized in that it has a control circuit which contains:

- a device which measures at the output of the LC ladder network the second-order distortion products of one or more pilot signals as a measure of the nonlinear distortions in the transmitted signals,
- a frequency-response-measuring device which measures at the output of the LC ladder network the level difference of two pilot signals as a measure of the frequency dependence of the attenuation of the LC ladder network, and
- a controller which adjusts the bias ($U_a$) of said one varactor diode ($C_a$) to obtain a maximum reduction of the measured distortion products and, if necessary, maintains the measured level difference of the two pilot signals constant during said adjustment by varying the bias ($U_b$) of said other varactor diode ($C_b$).

5. A circuit as claimed in claim 2, characterized in that it has a control circuit which contains:

- a device which measures at the output of the LC ladder network the second-order distortion products of one or more pilot signals as a measure of the nonlinear distortions in the transmitted signals,
- a frequency-response-measuring device which measures at the output of the LC ladder network the level difference of two pilot signals as a measure of the frequency dependence of the attenuation of the transmitted signals, and
- a controller which adjusts the bias ($U_a$) of said one varactor diode ($C_a$) to obtain a maximum reduction of the measured distortion products, maintains the bias ($U_b$) of said other varactor diode ($C_b$) at a constant maximum value, and adjusts the bias ($U_S$) determining the total capacitance of the two varactor diodes ($C_8$, $C_9$) in series opposition such that the level difference of the two pilot signals remains substantially independent of said adjustment of the bias ($U_a$) of said one varactor diode ($C_a$) .

6. Circuit designed to compensate for nonlinear distortions in signals transmitted through optical communications systems, comprising an LC section (L, $C_a$) whose capacitive element includes a reverse-biased varactor diode ($C_a$), characterized in that

two additional varactor diodes ($C_8$, $C_9$) in series opposition whose total capacitance is determined by an adjustable bias ($U_S$) are connected in parallel with the reverse-biased varactor diode ($C_a$).

7. A circuit as claimed in claim 6, characterized in that it has a control circuit which contains:

- a device which measures at the output of the LC ladder network the second-order distortion products of one or more pilot signals as a measure of the nonlinear distortions in the transmitted signals,
- a frequency-response-measuring device which measures at the output of the LC ladder network the level difference of two pilot signals as a measure of the frequency dependence of the attenuation of the transmitted signals, and
- a controller which adjusts the bias of the varactor diode to obtain a maximum reduction of the measured distortion products and adjusts the bias determining the total capacitance of the two varactor diodes in series opposition such that the level difference of the two pilot signals remains substantially independent of said adjustment of the bias of the varactor diode.

8. Circuit designed to compensate for nonlinear distortions in signals transmitted through optical communication systems, comprising an LC section (L, $C_a$) whose capacitive element includes a reverse-biased varactor diode ($C_a$), characterized in that it is a ladder network consisting of two or more circuits as claimed in any one of the preceding claims (Fig. 4, Fig. 5).

**Revendications**

1. Circuit pour l'égalisation de signaux déformes de façon non linéaire transmis par le biais de systèmes optiques de transmission d'informations avec un organe LC (L, $C_a$) dont l'élément capacitif contient une diode à capacité variable ($C_a$) polarisée dans la direction de blocage, caractérisé en ce qu'une autre diode à capacité variable ($C_b$) de polarité opposée est montée en parallèle par rapport à la diode à capacité variable ($C_a$) et est également polarisée dans la direction de blocage, et en ce que les deux tensions de polarisation ($U_a$, $U_b$) peuvent être réglées de telle façon que, soit essentiellement seule l'une des diodes à capacité variable ($C_a$), soit essentiellement seule l'autre diode à capacité variable ($C_b$) possède une capacité variant avec la tension de signal présente (figure 1).

2. Circuit selon la revendication 1, caractérisé en ce qu'un montage antisérie de deux autres diodes a

capacité variable ($C_8$, $C_9$) est monté en parallèle avec la capacité de l'organe LC, diodes dont la capacité totale est déterminée par une tension de polarisation ($U_S$) réglable (figure 3).

**3.** Circuit selon la revendication 1, caractérisé en ce qu'il possède un circuit de régulation qui contient :

- un système qui, à la sortie de l'organe LC, mesure les produits de distorsion de deuxième ordre suscités a partir d'un ou plusieurs signaux pilotes, comme mesure de la déformation non linéaire des signaux transmis, et
- un régulateur qui, sur la base des produits de distorsion mesurés, règle la tension de polarisation ($U_a$) de l'un des diodes à capacité variable ($C_a$) en vue d'une réduction maximale des produits de distorsion mesurés et règle la polarisation ($U_b$) de l'autre diode à capacité variable ($C_b$) à une valeur constante maximale.

**4.** Circuit selon la revendication 1, caractérisé en ce qu'il possède un circuit de régulation qui contient :

- un système qui, à la sortie de l'organe LC, mesure les produits de distorsion de deuxième ordre suscités à partir d'un ou plusieurs signaux pilotes, comme mesure de la déformation non linéaire des signaux transmis, et
- un système de mesure de la réponse en fréquence, qui, à la sortie de l'organe LC, mesure la différence de niveau de deux signaux pilotes comme mesure de la sélectivité de l'amortissement de l'organe LC, et
- un régulateur qui, sur la base des produits de distorsion mesurés, règle la tension de polarisation ($U_a$) de l'une des diodes à capacité variable ($C_a$) en vue d'une réduction maximale des produits de distorsion mesurés et, lors de ce réglage, si nécessaire, maintient constante la différence de niveau mesurée des deux signaux pilotes par la variation de la polarisation ($U_b$) de l'autre diode à capacité variable ($C_b$).

**5.** Circuit selon la revendication 2, caractérisé en ce qu'il possède un circuit de régulation qui contient :

- un système qui, à la sortie de l'organe LC, mesure les produits de distorsion de deuxième ordre suscités à partir d'un ou plusieurs signaux pilotes, comme mesure de la déformation non linéaire des signaux transmis, et
- un système de mesure de la réponse en fréquence, qui, à la sortie de l'organe LC, mesure la différence de niveau de deux signaux pilotes comme mesure de la sélectivité de l'amortissement des signaux transmis, et
- un régulateur qui, sur la base des produits de distorsion mesurés, règle la tension de polarisation ($U_a$) de l'une des diodes à capacité variable ($C_a$) en vue d'une réduction maximale des produits de distorsion mesurés et règle la tension de polarisation ($U_b$) de l'autre diode à capacité variable ($C_b$) à une valeur constante maximale et, sur la base de la différence de niveau mesurée des signaux pilotes, règle de telle façon la tension de polarisation ($U_S$) déterminant la capacité totale du montage antisérie des deux diodes à capacité variable ($C_8$, $C_9$) que la différence de niveau des deux signaux pilotes demeure largement indépendante du réglage, effectué en ce qui concerne une égalisation maximale, de la tension de polarisation ($U_a$) de l'une des diodes à capacité variable ($U_a$).

**6.** Circuit pour l'égalisation de signaux déformés de façon non linéaire transmis par le biais de systèmes optiques de transmission d'informations avec un organe LC (L, $C_a$) dont la capacité contient une diode à capacité variable ($C_a$) polarisée dans la direction de blocage, caractérisé en ce qu'un montage antisérie de deux autres diodes à capacité variable ($C_8$, $C_9$) est monté en parallèle avec la diode à capacité variable ($C_a$), diodes dont la capacité totale est déterminée par une tension de polarisation ($U_S$) réglable.

**7.** Circuit selon la revendication 6, caractérisé en ce qu'il possède un circuit de régulation qui contient :

- un système qui, à la sortie de l'organe LC, mesure les produits de distorsion de deuxième ordre suscités à partir d'un ou plusieurs signaux pilotes, comme mesure de la déformation non linéaire des signaux transmis, et
- un système de mesure de la réponse en fréquence, qui, à la sortie de l'organe LC, mesure la différence de niveau de deux signaux pilotes comme mesure de la sélectivité de l'amortissement des signaux transmis, et
- un régulateur qui, sur la base des produits de distorsion mesurés, règle la tension de polarisation de la diode à capacité variable en vue d'une réduction maximale des produits de distorsion mesurés et, sur la base de la différence de niveau mesurée des signaux pilotes, règle de telle façon la tension de polarisation déterminant la capacité totale du montage antisérie des deux diodes à capacité variable que la différence de niveau des deux signaux pilotes demeure largement indépendante du réglage, effectué en vue d'une égalisation maximale, de la tension de polarisation de la diode à capacité variable.

8. Circuit pour l'égalisation de signaux déformés de façon non linéaire transmis par le biais de systèmes optiques de transmission d'informations avec un organe LC (L, $C_a$) dont l'élément capacitif contient une diode à capacité variable ($C_a$) polarisée dans la direction de blocage, caractérisé en ce qu'il se compose d'un montage en cascade de plusieurs dispositifs de circuit tels qu'il sont décrits dans l'une des revendications précédentes (figure 4, figure 5).

FIG.1

FIG.2

FIG.3

FIG.4

FIG.5